Europäisches Patentamt

(19) European Patent Office

Office européen des brevets

(11) Publication number: **0 093 227**
**B1**

(12) **EUROPEAN PATENT SPECIFICATION**

(45) Date of publication of patent specification: **03.12.86**

(21) Application number: **83100836.2**

(22) Date of filing: **28.01.83**

(51) Int. Cl.⁴: **F 16 F 9/36, F 16 F 9/06**

(54) **Fluid flow control valve for a shock absorber.**

(30) Priority: **03.05.82 US 374374**

(43) Date of publication of application:
**09.11.83 Bulletin 83/45**

(45) Publication of the grant of the patent:
**03.12.86 Bulletin 86/49**

(84) Designated Contracting States:
**DE FR GB IT**

(56) References cited:
**DE-A-2 715 826**
**DE-B-1 299 177**
**FR-A-1 115 649**
**FR-A-1 585 825**
**FR-A-2 107 578**
**FR-A-2 385 953**
**GB-A-1 078 959**
**US-A-2 107 974**
**US-A-2 155 978**
**US-A-2 507 266**
**US-A-4 245 825**
**US-A-4 287 970**

(73) Proprietor: **MONROE AUTO EQUIPMENT COMPANY**
**1 International Drive**
**Monroe Michigan 48161 (US)**

(72) Inventor: **Goniea, Philip H.**
**15401 Collins**
**Romulus Michigan 48174 (US)**
Inventor: **Kamprath, Bertram P.**
**5641 Central**
**Monroe Michigan 48161 (US)**
Inventor: **Keeler, Laurence H.**
**5065 Mortar Creek**
**Monroe Michigan 48161 (US)**
Inventor: **Wheeler, Roger D.**
**4811 Wickford Green (N-4)**
**Sylvania Ohio 43560 (US)**
Inventor: **Bethell, Michael R.**
**1117 N. Roessler**
**Monroe Michigan 48161 (US)**
Inventor: **Groves, Gary W.**
**1217 E. Outer Drive**
**Monroe Michigan 48161 (US)**

(74) Representative: **Madgwick, Paul Roland et al**
**Ladas & Parry Isartorplatz 5**
**D-8000 München 2 (DE)**

## Description

This invention relates to improved valving for shock absorbers and particularly for shock absorbers of the pneumo-hydraulic or gas over oil type. The primary purpose of such valves is to enable gas or air to escape or be forced from the upper pressure chamber of the shock absorber and prevent gas from re-entering the pressure chamber via the valve. Gas, being compressible, causes erratic and often noisy operation of shock absorbers when present in a pressure chamber of a shock absorber.

U.S. Patent Nos. 2,107,974 and 2,507,266 show vent valves for shock absorbers. Each of the vent valves disclosed in these patents provides a metal to metal valve seal, is spring loaded and covers a fluid flow opening or valve port in a rod guide.

U.S. Patent No. 2,107,974 shows a spring loaded valve member in which an adjustment can be made to change the spring loading on the valve member. The spring does not serve to bias a packing or resilient seal member into sealing engagement.

U.S. Patent No. 2,507,266 shows a valve biased into engagement by a dual function seal packing and valve loading spring and in which the spring loading force on each the spring and the seal packing member is susceptible to undesirable fluctuation during operation of the shock absorber.

U.S. Patent Nos. 2,155,978; 3,520,384; 4,108,287, 4,189,033; 4,245,825, and 4,287,970 each show check valve arrangements which are in or coact with the rod guide of a shock absorber.

The valves shown in U.S. Patent 2,155,978 are dependent on a single function spring and are dependent on a very small surface area of force impingement for operation.

The valves shown in U.S. Patent Nos. 3,520,384; 4,108,287; 4,189,033; 4,245,825 and 4,287,970 are not spring biased and/or do not operate through or control flow through a separate fluid flow opening in a rod guide. Each of these patents show a valve used to control the gas and/or oil migration or flow which is inherently present between the piston rod and rod guide during operation of a shock absorber.

The object of the present invention is to provide a fluid flow control valve between a pressure chamber and reserve chamber of a shock absorber capable of venting gas from the pressure chamber to the reserve chamber of the shock absorber and prevent gas .from flowing from the reserve chamber to the pressure chamber and to enable additional ride control quality by permitting controlled liquid flow through the valve port.

The present invention provides a fluid flow control valve for a hydraulic shock absorber, said shock absorber having a rod guide, a seal chamber above said rod guide and a pressure chamber below said rod guide, said rod guide having a first radially inner annular sealing surface in said seal chamber, and a second radially outer annular sealing surface, said first and second sealing surfaces being concentric with and radially outwardly spaced from a piston rod which extends through and reciprocates within an opening in said rod guide; a fluid flow opening in said rod guide, said opening extending between said pressure chamber and a portion of said seal chamber between said first and said second sealing surfaces; annular seal means extending between said first sealing surface and said second sealing surface for selectively allowing fluid flow from said pressure chamber to said seal chamber and preventing fluid flow from said seal chamber to said pressure chamber through said fluid flow opening; shock absorber closure means defining an end of said seal chamber above said rod guide, said closure means having an end cap having an opening for reciprocation of said piston rod and a resilient packing member sealing around said rod and an annular portion of said end cap adjacent said opening for preventing fluid flow through said opening; and resilient biasing means placed between said resilient packing member and an annular portion of said seal means contiguous with said second annular sealing surface for resiliently urging said resilient packing member into sealing engagement with said piston rod and said end cap for preventing fluid flow through said opening and for urging said seal means into sealing engagement with each said first and said second sealing surface on said rod guide; characterized by said seal means being deflectively flexible whereby, a pressure differential between said seal chamber and said pressure chamber adequate to operate said valve deflects said seal means upward only from said first sealing surface for enabling fluid flow from said pressure chamber to said seal chamber while said biasing means continues to urge said seal means into sealing engagement with said second sealing surface and said packing member into sealing engagement with said rod and said end cap with a substantially constant, unchanging force.

In the drawings:

FIGURE 1 is a full section view of a two tube gas pressurized shock absorber having a fluid flow control valve of this invention;

FIGURE 2 is an enlarged partial view of the shock absorber shown in FIGURE 1 showing the valve of this invention in a closed position; and

FIGURE 3 shows the valve shown in FIGURE 2 in an open position.

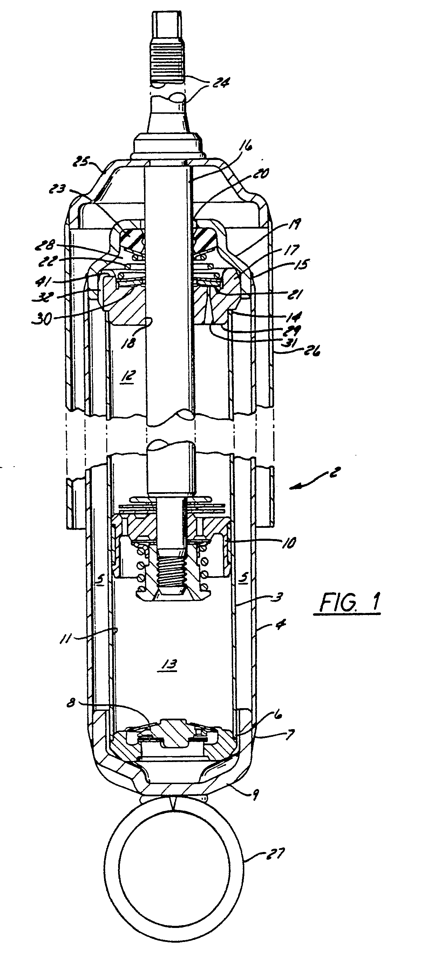

FIGURE 1 shows, in full section, a two tube gas pressurized shock absorber assembly 2. Assembly 2 is comprised of a pressure tube 3 and a reserve tube 4, which tube 4 is concentric about and radially outwardly spaced from tube 3 to form an annular fluid reservoir or reserve chamber 5. Tubes 3 and 4 each have a first end 6 and 7, respectively. First end 6 of tube 3 has a base valve assembly 8 selectively sealingly mounted within it. A first shock assembly closure cap 9 is sealingly and rigidly engaged, such as by welding, with the first end 7 of reserve tube 4 and mechanically engaged with an exterior portion of tube 3 adjacent its first end 6 to seal the assembly 2 and maintain tubes 3 and 4 concentric.

A piston assembly 10 is reciprocably mounted within pressure tube 3 and, by virtue of being slidably sealed to an annular portion of the interior surface 11 of tube 3, divides the interior of tube 3 into two variable volume pressure chambers, such as an upper pressure chamber 12 and a lower pressure chamber 13.

Each pressure tube 3 and reserve tube 4 have a second end 14 and 15, respectively. A piston rod 16 is sealingly engaged with piston assembly 10 and extends out through end 14 of tube 3.

A rod guide 17 having a central opening 18 for enabling reciprocation of rod 16 through it is sealingly engaged with end 14 of tube 3. An assembly end cap 19, having a central opening 20 for receiving rod 16, is sealingly and rigidly engaged, such as by welding, with second end 15 of tube 4. Rod guide 17 and end cap 19 are mechanically engaged with each other radially to maintain second ends 14 and 15 of tubes 3 and 4, respectively, in a substantially rigid concentric relationship. Between rod guide 10 and end cap 19 are a valve assembly 21, a biasing means, such as a conical section of a helical spring 22 and a resilient seal member 23.

Rod 16 terminates in an attachment means, such as threaded stem 24, to enable it to be attached to an appropriate mass, such as the sprung portion of a vehicle body. Mounted on rod 16 adjacent stem 24 is a dust cover cap 25 and a tubular dust cover 26. Cap 25 and cover 26 serve to protect exposed portions of rod 16 from dirt and moisture as it slides in and out of tube 3.

At the opposite end of shock assembly 2 appropriate attachment means, such as loop 27, is rigidly attached to end cap 9. Loop 27 enables attachment of the shock assembly 2 to an appropriate mass, such as an unsprung wheel assembly of a vehicle.

A seal chamber 28 is formed between rod guide 17 and seal member 23. Rod guide 17 has a first pressure chamber facing surface 29 and a second seal chamber facing surface 30. A fluid flow means, such as fluid flow opening 31, extends between surfaces 29 and 30 to place pressure chamber 12 in potential fluid flow communication with reserve chamber 5 via seal chamber 28 and a flow passage 32. Valve assembly 21 selectively prevents fluid flow through opening 31, dependent upon the direction and extent of force exerted on the valve by the fluid.

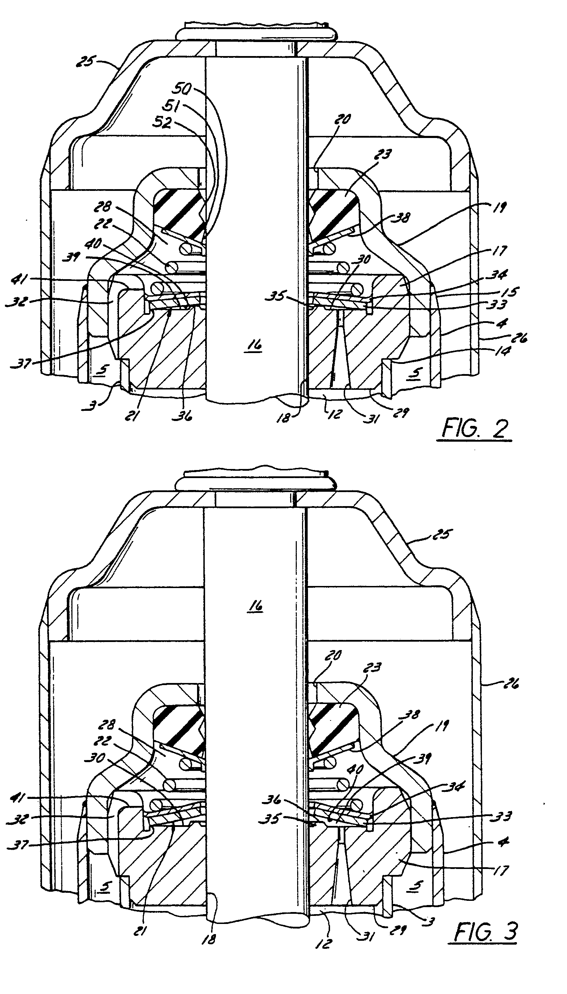

FIGURE 2 shows an enlarged partial view of the shock absorber shown in FIGURE 1.

Valve 21 is comprised of two substantially annular valve members of which a first valve member 33 is preferably formed of a resilient flexible material, such as a polymerized tetrafluoroethylene sold under the trademark Teflon, and a second valve member 34 is formed of a deflective flexible material such as relatively thin gauge spring steel. Valve member 34 overlays member 33.

Rod guide 17 has on its seal chamber facing surface 30 a raised or axially extending circular annular seal ridge 35. Ridge 35 is preferably located, as shown, concentric with and radially outwardly spaced from the opening 18 in rod guide 17. Seal member 33 is arranged to be sealingly engaged with an end surface 36 of seal ridge 35 and with an outer circumferential annular portion 37 of the seal chamber facing surface 30 of rod guide 17.

Above rod guide 17 is end cap 19, resilient seal or packing member 23 and a conical seal support member 38. Conical spring 22 is placed in compression between the top surface of valve member 34 and a lower surface of seal support 38. Packing member 23 has a central opening 50 having a pair of annular seal lips 51 and 52 which form a static and sliding seal about rod guide 16. Packing member 23 therefore serves to prevent fluid flow from seal chamber 28 through opening 20 in end cap 19. Spring 22 therefore serves the dual function of urging packing member 23 into sealing engagement with end cap 19 and rod guide 16 and urging valve members 33 and 34 into sealing engagement with each other and with annulus 37 of surface 30 and surface 36 of seal ridge 35 to prevent fluid flow from seal chamber 28 to pressure chamber 12. An annular chamber 39, substantially triangular in cross-section, is formed between a lower surface 40 of seal member 33, seal ridge 35 and the spring biased sealed contact between seal member 33 and annulus 37 of surface 30.

As shown, fluid flow opening 31 places upper pressure chamber 12 in fluid flow communication with chamber 39. Annular chamber 39 provides a large surface area on surface 40 of valve member 33 on which the pressure of the liquid or gas flowing through opening 31 can act to open the valve smoothly.

FIGURE 3 shows the valve shown in FIGURE 2 in which the valve is in an open or fluid flow position. As shown, when the fluid pressure exerted through opening 31 into annular chamber 39 is sufficient to cause the lower surface 40 of member 33 to lift off seal ridge top surface 36 gas and/or liquid is able to move from pressure chamber 12 through chamber 39 into seal chamber 28 and then, via opening, 32 formed where the rod guide contacts end cap 19, flow into reserve chamber or reservoir 5.

The shock absorber assembly 2, under normal conditions, has pressure chambers 12 and 13 full of oil and reserve chamber 5 partially filled with oil and partially pressurized with an appropriate gas, such as nitrogen. The shock absorber is normally used in a vertical, or near vertical position, as shown in FIG. 1, and the gas under pressure therefore generally occupies the upper portion of reserve chamber 5 adjacent the rod guide 17 and, due to the flow passage 32, seal chamber 28.

Referring to FIGURE 2, flow opening 31 and annular chamber 39 are normally filled with oil. Also, a quantity of oil is generally maintained in the cup-like portion of rod guide 17 up to the lowest point 41 which enables the oil to drain from the rod guide into reserve chamber 5 through passage 32. This shallow pool of oil therefore generally covers valve members 33 and 34 and consequently provides a liquid seal for the valve 21. This pool of oil is present due to migration of oil between the rod 16 and rod guide opening 18 as the rod reciprocates through opening 18 in use.

Shock absorbers are generally shipped and stored in a horizontal position which over time and with the inducement of the normal motions and movements of transport during shipping may cause or allow gas in reserve chamber 5 to get into pressure chamber 12. When the shock absorber is pulled off the shelf and installed in its normal vertical or near vertical operative position on a vehicle any displaced gas will normally occupy an upper portion of pressure chamber 12 as well as opening or flow port 31 and annular chamber 39.

Under normal conditions as rod 16 withdraws from the unit and piston 10 is forced toward rod guide 17 oil is forced through pressure controlled valve openings in piston 10 from upper pressure chamber 12 to lower pressure chamber 13 and also through flow opening 31 and valve 21 into seal chamber 28 where it drains through opening 32 into reserve chamber 5. The presence of a quantity of gas in the upper portion of pressure chamber 5 tends to cause undesirable eratic and/or noisy operation of the shock absorber due to the compressibility of the gas.

Operation of a shock absorber with a valve of this invention is as follows.

During the normal stance of a vehicle at rest with a shock having the rod stem 24 attached to the spring mass or chassis of the wheel and the loop 27 attached to the unsprung mass, generally a wheel and axle assembly, the piston resides at an appropriate position predetermined by design in pressure tube 3. During movement of the vehicle as the wheel encounters surface anomolies on the travel surface the shock operates in a compression mode and an extension mode. In the compression mode the chassis and wheel assembly move toward each other and the piston 10 consequently moves downwardly toward base valve assembly 8 in pressure tube 3. In the compressive mode lower pressure chamber 13 decreases in volume and upper pressure chamber 12 increases in volume.

In the extension mode the chassis and wheel assembly move away from each other and the piston 10 moves upward in pressure tube 3 toward rod guide 17. In the extension mode lower pressure chamber 13 increases in volume and upper pressure chamber 12 decreases in volume.

Each base valve 8 and piston 10 generally contain fluid flow control orifices which allow fluid flow in response to fluid pressure.

In the compression mode hydraulic fluid is forced through the piston from decreasing volume pressure chamber 13 into increasing volume pressure chamber 12 as the piston advances downwardly in pressure tube 3. Due to the advancing presence of the piston rod all of the hydraulic fluid displaced by the piston from chamber 13 cannot be accommodated by chamber 12. Consequently, this excess hydraulic oil, having a volume directly proportional to the intrusion of the rod is returned to reserve chamber 5 both through base valve 8 and via opening 31 and seal chamber 28.

During the extension mode rod 16 withdraws from pressure tube 3 and piston 10 moves upward. As upper pressure chamber 12 consequently decreases in volume hydraulic oil is forced through piston 10 into pressure chamber 13. However, as chamber 12 has less volume than chamber 13 due to the presence of the piston rod, chamber 13 will tend to cavitate which causes a pressure differential across base valve 8 causing the valve to open and a quantity of make-up hydraulic fluid is drawn from the reserve chamber 5 into pressure chamber 13 to keep chamber 13 filled with oil.

The degree of movement retardation or damping provided by a particular shock absorber is controlled by the resistance to flow of the flow orifices in piston 10 and base valve 8. The greater the resistance to fluid flow through these orifices, the greater the movement retardation of the shock will be.

In pneumo-hydraulic shock absorbers having a quantity of an inert gas, such as nitrogen, occupying the upper portion of reserve chamber 5, at pressures which may range from 3.5 to 21 kg/Cm$^2$ (50 to 300 psi) the gas offers an additional beneficial degree of movement control of the piston.

During the compression mode oil forced out through base valve 8 is subjected to the additional pressure of the gas on top of the oil pool in reserve chamber 5.

In the extension mode as the rod withdraws and the piston travels upward in the pressure tube most of the oil displaced from chamber 12 will be forced through orifices in the piston into lower pressure chamber 13. A quantity of oil will be displaced through fluid flow opening or valve port 31 through valve 21 by deflecting valve members 33 and 34 upward to force the lower surface of member 33 out of sealing engagement with the top surface 36 of seal ridge 35. The amount of flow through flow opening 31 and valve 21 is controllable by the selective sizing of the flow opening 31 or by providing a plurality of flow openings in the rod guide. Additionally, the stiffer, i.e. more resistant to deflection, the deflectively flexible valve members of valve 21 are, the greater the resistance to flow.

Also, flow through opening 31 and valve 21 is controlled by the restriction or resistance to flow offered by the flow orifices in base valve 8 and piston 10 relative to the resistance to flow offered by opening 31 and valve 21. The relative flow resistances of these three flow controls can be varied to provide a great variety of dampening characteristics of a shock absorber.

No interface barrier is provided between the gas and oil in reservoir chamber 5. Consequently, the gas and oil tend to mix and mingle during operation of the shock and some gas becomes entrained within the oil. Eventually, some gas is likely to end up occupying a pocket or space at the top of pressure chamber 12 next to rod guide 17. As explained above, such gas migration can also occur during transport and storage of shock absorbers prior to installation on vehicles.

As the gas is compressible, it causes an initial inconsistent resistance to movement of the piston in the pressure tube. This gas can also cause noisy operation of the shock absorber. The valve on the rod guide enables the gas to be forced from the pressure chamber on just a few strokes of the piston because on each stroke some of the gas is forced through opening 31 and valve 21 until it is excluded from the upper pressure cylinder and replaced by oil. As the valve effectively serves to prevent gas from flowing from the seal chamber to the upper pressure chamber, the upper pressure chamber will remain virtually free of gas after an initial purging of the gas from it. If, due to migration by entrainment of gas in oil, a gas pocket forms at a subsequent time it will be readily purged upon operation of the vehicle in a relatively short time.

It is important that the valve operates in a consistent, smooth and quiet manner. The valve of this invention provides that desired performance due to the resilient to narrow surface seal between seal member 33 and surface 36 of seal ridge 35 and because it is not subjected to a fluctuating spring loading such as would occur if hold down spring 22 were required to compress to enable the valve to move axially to open. Also, it is desirable that resilient packing member 23 be urged into sealing engagement with end closure member 19 with a constant non-fluctuating force. Dual function helical spring 22 therefore provides a desirable constant, non-fluctuating spring loading on each the packing member and the seal and operation of the valve is dependent on the deflective characteristic of the valve members and not on compressibility of hold-down spring 22.

## Claims

1. A fluid flow control valve for a hydraulic shock absorber, said shock absorber having a rod guide (17), a seal chamber (28) above said rod guide and a pressure chamber (12) below said rod guide, said rod guide (17) having a first radially inner annular sealing surface (36) in said seal chamber (28), and a second radially outer annular sealing surface (37), said first and second sealing surfaces (36, 37) being concentric with and radially outwardly spaced from a piston rod (16) which extends through and reciprocates within an opening (18) in said rod guide (17); a fluid flow opening (31) in said rod guide (17), said opening (31) extending between said pressure chamber (12) and a portion of said seal chamber (28) between said first (36) and said second (37) sealing surfaces; annular seal means (21) extending between said first sealing surface (36) and said second sealing surface (37) for selectively allowing fluid flow from said pressure chamber (12) to said seal chamber (28) and preventing fluid flow from said seal chamber (28) to said pressure chamber (12) through said fluid flow opening (31); shock absorber closure means defining an end of said seal chamber above said rod guide, said closure means having an end cap (19) having an opening (20) for reciprocation of said piston rod (16) and a resilient packing member (23) sealing around said rod (16) and an annular portion of said end cap (19) adjacent said opening (20) for preventing fluid flow through said opening (20); and resilient biasing means (22) placed between said resilient packing member (23) and an annular portion of said seal means (21) contiguous with said second annular sealing surface (37) for resiliently urging said resilient packing member (23) into sealing engagement with said piston rod (16) and said end cap (19) for preventing fluid flow through said opening (20) and for urging said seal means (21) into sealing engagement with each said first (36) and said second (37) sealing surface on said rod guide (17); characterized by said seal means (21) being deflectively flexible whereby, a pressure differential between said seal chamber (28) and said pressure chamber (12) adequate to operate said valve deflects said seal means (21) upward only from said first sealing surface (36) for enabling fluid flow from said pressure chamber (12) to said seal chamber (28) while said biasing means (22) continues to urge said seal means (21) into sealing engagement with said second sealing surface (37) and said packing member (23) into sealing engagement with said rod (16) and said end cap (19) with a substantially constant, unchanging force.

2. A fluid flow control valve according to claim 1, characterized in that said first sealing surface (36) on said rod guide (17) is a terminal end of an annular seal ridge (35).

3. A fluid flow control valve according to claim 1 or 2, characterized in that an annular chamber (39) is formed between said seal means (21) and said rod guide (17).

4. A fluid flow control valve according to claims 1, 2 or 3, characterized in that said seal means (21) is comprised of a first resilient annular member (33) sealingly engaged with said first (36) and said second (37) sealing surfaces and a second deflectively flexible metal annular seal member (34) sealingly engaged with said first annular seal member (33).

5. A fluid flow control valve according to any of claims 1 to 4, characterized in that said biasing means is a section of a conical helical spring (22).

## Revendications

1. Valve de commande d'écoulement de fluide pour un amortisseur de chocs hydraulique, ledit amortisseur de chocs comportant un guide de tige (17), une chambre d'étanchéité (28) au-dessus dudit guide de tige et une chambre de pression (12) au-dessous dudit guide de tige, ledit guide de tige (17) comportant une première surface annulaire d'étanchéité (36) s'étendant radialement du côté de ladite chambre d'étanchéité (28), et une seconde surface annulaire d'étanchéité (37) s'étendant radialement à l'extérieur de la première surface annulaire, lesdites première et seconde surfaces d'étanchéité (36, 37) étant concentriques à, et espacées radialement autour d'une tige de piston (16) qui traverse et se déplace alternativement dans une ouverture (18) ménagée dans ledit guide de tige (17); un orifice d'écoulement de fluide (31) ménagé dans ledit guide de tige (17), ledit orifice (31) s'étendant entre ladite chambre de pression (12) et une partie de ladite chambre d'étanchéité (28) située entre lesdites première (36) et seconde (37) surfaces d'étanchéité; un moyen annulaire d'étanchéité (21) s'étendant entre ladite première surface d'étanchéité (36) et ladite seconde surface d'étanchéité (37) et dont la fonction est sélectivement de permettre un écoulement de fluide de ladite chambre de pression (12) vers ladite chambre d'étanchéité (28), et d'empêcher un écoulement de fluide de ladite chambre d'étanchéité (28) vers ladite chambre de pression (12) par l'intermédiaire dudit orifice d'écoulement de fluide (31); des moyens de fermeture d'amortisseur de chocs définissant une extrémité de ladite chambre d'étanchéité au-dessus dudit guide de tige, lesdits moyens de fermeture comportant un chapeau d'extrémité (19) pourvu d'une ouverture (20) pour un mouvement alternatif de ladite tige de piston (16) et une garniture élastique (23) assurant l'étanchéité entre ladite tige (16) et une partie annulaire dudit chapeau d'extrémité (19) adjacente à ladite ouverture (20) pour empêcher un écoulement de fluide par ladite ouverture (20); et un moyen élastique de poussée (22) disposé entre ladite garniture élastique (23) et une partie annulaire dudit moyen d'étanchéité (21) adjacente à ladite seconde surface annulaire d'étanchéité (37) pour pousser élastiquement ladite garniture élastique (23) en contact étanche contre la tige de piston (16) et ledit chapeau d'extrémité (19) pour empêcher du fluide de s'écouler par ladite ouverture (20) et pour pousser ledit moyen d'étanchéité (21) en contact étanche contre chacune desdites première (36) et seconde (37) surfaces d'étanchéité dudit guide de tige (17); caractérisée en ce que ledit moyen d'étanchéité (21) est souple et peut s'infléchir, de telle façon qu'une différence de pression entre ladite chambre d'étanchéité (28) et ladite chambre de pression (12), appropriée pour actionner ladite valve, infléchisse ledit moyen d'étanchéité (21) vers le haut seulement à partir de ladite première surface d'étanchéité (36) pour permettre un écoulement de fluide de ladite chambre de pression (12) vers ladite chambre d'étanchéité (28) pendant que ledit moyen de poussée (22) continue à appliquer ledit moyen d'étanchéité (21) en contact étanche contre ladite seconde surface d'étanchéité (37) et ladite garniture (23) en contact étanche contre ladite tige (16) et ledit chapeau d'extrémité (19) avec une force sensiblement constante et invariante.

2. Valve de commande d'écoulement de fluide selon la revendication 1, caractérisée en ce que ladite première surface d'étanchéité (36) située sur ledit guide de tige (17) est définie par le rebord d'une nervure annulaire d'étanchéité (35).

3. Valve de commande d'écoulement de fluide selon la revendication 1 ou 2, caractérisée en ce qu'une chambre annulaire (39) est définie entre ledit moyen d'étanchéité (21) et ledit guide de tige (17).

4. Valve de commande d'écoulement de fluide selon l'une quelconque des revendications 1 à 3, caractérisée en ce que ledit moyen d'étanchéité (21) est constitué par un premier élément annulaire élastique (33) appliqué avec contact étanche contre lesdites première (36) et seconde (37) surfaces d'étanchéité, et par un second élément annulaire d'étanchéité métallique (34) souple et déformable en s'infléchissant, ledit second élément étant appliqué avec contact étanche contre ledit premier élément annulaire d'étanchéité (33).

5. Valve de commande d'écoulement de fluide selon l'une quelconque des revendications 1 à 4, caractérisée en ce que ledit moyen de poussée est une portion de ressort hélicoïdal conique (22).

**Patentansprüche**

1. Stromventil für einen hydraulischen Stoßdämpfer, der eine Stangenführung (17) besitzt, ferner eine oberhalb der Stangenführung angeordnete Sperrkammer (28) und eine unterhalb der Stangenführung angeordnete Druckkammer (12), wobei die Stangenführung (17) eine radial einwärts angeordnete, erste ringförmige Dichtfläche (36) in der Sperrkammer (28) und eine radial auswärts angeordnete, zweite ringförmige Dichtfläche (37) besitzt, die erste und die zweite Dichtfläche (36, 37) radial auswärts im Abstand von einer Kolbenstange angeordnet und mit ihr konzentrisch sind, die Kolbenstange eine Durchströmöffnung (18) in der Stangenführung (17) durchsetzt und in dieser Öffnung hin- und herbewegbar ist, die genannte Öffnung (31) sich zwischen der Druckkammer (12) und einem Teil der Sperrkammer (28) zwischen der ersten (36) und der zweiten (37) Dichtfläche erstreckt; eine ringförmige Dichteinrichtung (21) sich zwischen der ersten Dichtfläche (36) und der zweiten Dichtfläche (37) erstreckt und wahlweise eine Fluidströmung aus der Druckkammer (12) in die Sperrkammer (28) gestattet und eine Fluidströmung aus der Sperrkammer (28) zu der Druckkammer (12) durch die Durchströmöffnung (31) verhindert; ein Stoßdämpferverschluß oberhalb der Stangenführung ein Ende der Sperrkammer bildet und eine Endkappe (19) mit einer Öffnung (20) besitzt, durch die hindurch die Kolbenstange (16) hin- und herbewegbar ist, sowie ein die Kolbenstange (16) dicht umschließendes, elastisches Dichtelement (23), die Endkappe (19) im Bereich der genannten Öffnung (20) einen ringförmigen Teil besitzt, der eine Fluidströmung durch die Öffnung (20) verhindert, und zwischen dem elastischen Dichtelement (23) und einem an der zweiten ringförmigen Dichtfläche (37) anliegenden ringförmigen Teil der Dichteinrichtung (21) eine elastische Vorbelastungseinrichtung (22) vorgesehen ist, die das elastische Dichtelement (23) elastisch dicht an die Kolbenstange (16) und die Endkappe (19) anhält, um eine Fluidströmung durch die genannte Öffnung (20) hindurch zu verhindern, und die Dichteinrichtung (21) dicht an die erste (36) und die zweite (37) Dichtfläche der Stangenführung (17) anhält, dadurch gekennzeichnet, daß die Dichtmittel (21) elastisch auslenkbar sind, so daß unter der Einwirkung einer zum Betätigen des Ventils genügenden Druckdifferenz zwischen der Sperrkammer (28) und der Druckkammer (12) die Dichteinrichtung (21) nur von der ersten Dichtfläche (36) weg aufwärts ausgelenkt wird, um eine Fluidströmung von der Druckkammer (12) in die Sperrkammer (28) zu gestatten, während die Vorbelastungseinrichtung (22) mit einer im wesentlichen konstanten, unveränderten Kraft die Dichteinrichtung (21) weiter dicht an die zweite Dichtfläche (37) anhält und das Dichtelement (23) dicht an die Stange (16) und die Endkappe (19) anhält.

2. Stromventil nach Anspruch 1, dadurch gekennzeichnet, daß die erste Dichtfläche (36) an der Stangenführung (17) ein Ende einer ringförmigen Dichtrippe (35) ist.

3. Stromventil nach Anspruch 1 oder 2, dadurch gekennzeichnet, daß zwischen der Dichteinrichtung (21) und der Stangenführung (17) eine Ringkammer (39) ausgebildet ist.

4. Stromventil nach Anspruch 1, 2 oder 3, dadurch gekennzeichnet, daß die Dichteinrichtung (21) ein erstes elastisches ringförmiges Element (33) besitzt, das dicht an der ersten (36) und der zweiten (37) Dichtfläche anliegt, und ein aus Metall bestehendes, elastisch auslenkbares, zweites ringförmiges Dichtelement (34), das dicht an dem ersten ringförmigen Dichtelement (33) anliegt.

5. Stromventil nach einem der Ansprüche 1 bis 4, dadurch gekennzeichnet, daß die Vorbelastungseinrichtung ein Teil einer konischen Wendelfeder (22) ist.

_FIG. 1_

FIG. 2

FIG. 3